# EUROPEAN PATENT APPLICATION

(11) **EP 4 215 358 A1**
(43) Date of publication of application: **26.07.2023**
(21) Application number: 21869566.6
(22) Date of filing: 23.08.2021
(51) Int. Cl.: B32B 7/023, B32B 27/20, B32B 27/36, B32B 27/32

(54) **COLOR-CHANGING SHEET**

(30) Priority: 15.09.2020 KR 20200118249
(71) Applicant: Toray Advanced Materials Korea Inc., Gumi-si, Gyeongsangbuk-do 39389 (KR)
(72) Inventor: HAN, Beom Taek, Gumi-si Gyeongsangbuk-do 39389 (KR); MIN, Ho Jin, Gumi-si Gyeongsangbuk-do 39389 (KR); LEE, Nam Heui, Gumi-si Gyeongsangbuk-do 39389 (KR)
(74) Representative: Groth & Co. KB
(86) International application number: PCT/KR2021/011166
(87) International publication number: WO 2022/059943

(57) **Abstract**

A color-changing sheet according to an embodiment of the present invention may include a base layer having a brightness (L value) of less than 40 and a color layer positioned on at least one surface of the base layer, containing a color dye or a pigment, and having a transmittance of 20 to 90%, wherein a thickness ratio of the base layer to the color layer is 0.1 to 10, and may realize color change without adding additional particles.

## Description

### TECHNICAL FIELD

The present invention relates to a color-changing sheet, and more particularly, to a color-changing sheet in which viewing color changes depending on a viewing angle.

### BACKGROUND ART

In general, decorative sheets (decor sheets) are sheets with various colors and patterns, which are attached to the surface of various office/residential furniture, such as wardrobes or desks, or to building materials and indoor interior surfaces to provide various visual/tactile effects to users.

The decorative sheets are fabricated by preparing plastic resin such as polyvinyl chloride-based resin or polypropylene resin in the form of a sheet and applying various colors and patterns thereto. As the area of application of the decorative sheets with specific colors and patterns gradually increases, in addition to providing simple colors and patterns, a decorative sheet that provides various visual effects on the surface of the decorative sheet through additional materials is being used.

One of the decorative sheets creating various visual effects is a color-changing decorative sheet. Such a color-changing decorative sheet is applied particles such as peal or iron oxide particles on the surface of the sheet so that viewing color changes depending on a viewing angle. The color-changing decorative sheet may provide a high aesthetic effect to the user by providing color that variously changes rather than providing monotonous single color as the color of the sheet changes depending on an angle of the direction in which the user views.

However, when particles such as pearl or iron oxide particles are added to the inside of an extruded sheet or applied through a separate coating process in the process of manufacturing a decorative sheet, surface roughness may increase or appearance defects may occur due to the size of the particles and it may be difficult to control the particles to be uniformly distributed on the surface of the sheet. For example, Korean Patent Publication No. 10-2014-0013822 discloses an interior sheet having a pearl printed layer therein, but as described above, appearance defects may occur due to pearl particles and there is a problem in that it is difficult to control the pearl particles to be uniformly distributed in the pearl printed layer.

### (Prior Art Document)

(Patent Document 1) Korean Patent Publication No. 10-2014-0013822

### DETAILED DESCRIPTION OF THE INVENTION

### TECHNICAL PROBLEM

An object of the present invention is to provide a color-changing sheet in which viewing color changes depending on a viewing angle or lighting without adding additional particles in order to solve the issues of appearance defect and particle distribution due to the addition of particles.

The aforementioned and other objects and advantages of the invention will become apparent to those skilled in the art from reading the following description illustrating preferred embodiments of the invention.

### TECHNICAL SOLUTION

The above object is achieved by a color-changing sheet comprising a base layer having a brightness (L value) of less than 40 and a color layer positioned on at least one surface of the base layer, containing a color dye or a pigment, and having a transmittance of 20 to 90%, wherein a thickness ratio of the base layer to the color layer is 0.1 to 10.

Preferably, the color-changing sheet may further include a protective coating layer formed on the color layer.

Preferably, the base layer and the color layer may include at least one selected from polyester, polycarbonate, and polypropylene.

Preferably, the color layer may include 4 to 9 parts by weight of a color dye or a pigment based on 100 parts by weight of a polyester resin.

Preferably, transmittance of the color-changing sheet may be 5% or less.

Preferably, the base layer may have a thickness of 0.03 to 0.3 mm.

Preferably, the color layer may have a thickness of 0.03 to 0.3 mm.

Preferably, a difference in brightness index (L value) for each measurement angle of the color layer may be 60 to 88%.

Preferably, the color-changing sheet may have a variation (dL) of an L value is 60 to 88, a variation (da) of an a value is 4 to 30, and a variation (db) of a b value is 65 to 181 in the L*a*b color coordinate system.

Preferably, the base layer may be black and the color layer may be red or blue.

### EFFECT OF THE INVENTION

The color-changing sheet according to an embodiment of the present invention imparts a color change to the sheet without adding additional particles such as pearl or iron oxide particles, thereby preventing appearance defects caused by the particles, and preventing non-uniform distribution of the particles.

In addition, the color-changing sheet according to an embodiment of the present invention may provide a decorative sheet in which viewing color changes depending on the angle or lighting through a relatively simple manufacturing process using multi-layer extrusion technology.

However, the effects of the present invention are not limited to the effects mentioned above, and other effects not mentioned will be clearly understood by those skilled in the art from the description below.

### BRIEF DESCRIPTION OF THE DRAWINGS

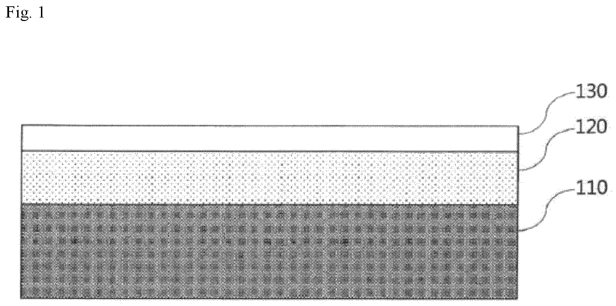

FIG. 1 is a view showing a configuration of a color-changing sheet according to an embodiment of the present invention.

### BEST MODE FOR INVENTION

The invention will be described more fully with reference to the accompanying drawings, in which example embodiments of the inventions are shown. This invention may, however, be embodied in many different forms and should not be construed as limited to only the embodiments set forth herein.

In the drawings, the thickness of layers and regions are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

Unless otherwise defined, all technical and scientific terms used herein have the same meaning as commonly understood by one of ordinary skill in the art to which this invention belongs. In case of conflict, the present specification, including definitions, will control. Although methods and materials similar or equivalent to those described herein can be used in the practice or testing of the invention, suitable methods and materials are described herein.

FIG. 1 is a view showing a configuration of a color-changing sheet according to an embodiment of the present invention.

Referring to FIG. 1, a color-changing sheet according to an embodiment of the present invention may include a base layer 110 and a color layer 120 formed on at least one surface of the base layer 110, and may further include a protective coating layer 130 formed on the color layer 120.

The base layer 110 and the color layer 120 may include at least one selected from polyester, polycarbonate, and polypropylene. In this case, the base layer 110 and the color layer 120 may be formed of the same material, or may be formed of different materials as necessary.

As one example, the base layer 110 and the color layer 120 may be composed of glycol-modified polyethylene terephthalate (PET-G) and polybutylene terephthalate (PBT).

Glycol modified polyethylene terephthalate (PET-G) resin included in glycol-modified polyethylene terephthalate (PET-G) is an amorphous resin formed by copolymerization of terephthalic acid (TPA), ethylene glycol (EG), and cyclohexanedimethanol (CHDM), which has excellent processability, moldability, and printability, no deformation due to shrinkage, excellent impact resistance, no chlorine gas when incinerated or in the event of a fire, and no harmful substances, such as environmental hormones, etc. Thus, it is suitable for use in the color changing sheet of the present invention used as a decorative sheet.

Polybutylene terephthalate (PBT) is a crystalline polymer, which has characteristics of improving solvent resistance and flexibility when forming a skin layer. Thus, when the protective coating layer 130 is coated on the color layer 120, a coating liquid is prevented from permeating into the color layer 120, the high solvent resistance prevents damage to the base layer 110 and the color layer 120, and elongation is increased. In addition, as the PBT is mixed into the base layer 110 and the color layer 120, a forming temperature is lowered, thereby increasing elongation and improving hazy phenomenon.

In this case, a thickness ratio (thickness ratio of base layer to color layer) between the base layer 110 and the color layer 120 may be preferably 0.1 to 10. When the thickness ratio is less than 0.1, it may be difficult to obtain a layer with a uniform color distribution because the thickness of the base layer is relatively small and an excessive amount of color dye or pigment is necessary to achieve sufficient shielding. When the thickness ratio is greater than 10, the thickness of the color layer is relatively small and the color-changing effect is reduced.

In addition, while the base layer 110 and the color layer 120 satisfy the above thickness ratio, the thickness of the base layer 110 is preferably 0.03 to 0.3 mm and the thickness of the color layer 120 is preferably 0.03 to 0.3 mm.

In one embodiment, the base layer 110 preferably has a brightness (L value) of less than 40 according to the color difference system. When the brightness (L value) of the base layer 110 is 40 or more, the effect of color changing depending on the viewing angle is reduced. In addition, the base layer 110 has more preferably a black color. Such a brightness (L value) of the base layer 110 of less than 40 may be achieved by adding a black dye or pigment to the resin constituting the base layer 110. Also, the same effect may be obtained if the brightness is less than 40, irrespective of the color dye and/or pigment content of the base layer.

In one embodiment, the color layer 120 preferably contains 4 to 9 parts by weight of a color dye or pigment based on 100 parts by weight of the polyester resin. If the content of the color dye or pigment is less than 4 parts by weight, it is difficult to visually recognize the color of the color layer, and if the content of the color dye or pigment is more than 9 parts by weight, the effect of color changing depending on the angle is reduced.

In one embodiment, the transmittance of the color layer 120 analyzed according to ASTM D1003 is preferably 20 to 90%. If the transmittance of the color layer 120 is less than 20, the effect of color changing depending on the angle is reduced, and if the transmittance is greater than 90%, it is difficult to visually recognize the color of the color layer.

In one embodiment, the color layer 120 preferably has a difference in brightness index (L value) of 60 to 88% for each measurement angle. More specifically, when the color layer 120 is measured by a 6-angle multi-angle spectral colorimeter, it is preferable that the difference in color brightness index for each measurement angle is 60 to 88%.

In addition, the color layer 120 preferably has a red or blue color in order to create a more effective color changing effect.

The protective coating layer 130 is formed by applying a coating composition to the surface of the color layer 120. In this case, the coating composition forming the protective coating layer 130 may be applied a general ultraviolet-curable coating.

The color-changing sheet having the above-described configuration according to one embodiment of the present invention preferably has a variation dL of L value varying in the range of 60 to 88, a variation da of a value varying in the range of 4 to 30, and a variation db of b value varying in the range of 65 to 181 in the L*a*b color coordinate system. More specifically, when the color-changing sheet is measured by a 6-angle multi-angle spectral colorimeter, it is preferable that a range of a dL value, which is a difference between a maximum value and a minimum value, varies in the range of 60 to 88, a range of the da value varies in the range of 4 to 30, and a range of a db value varies in the range of 65 to 181 within an angular range of -15 to 110 degrees. At this time, if the range of the dL value is less than 60, the color layer has a color uniformity issue, and if it is greater than 88, the color-changing effect is insignificant. Also, if the range of the da value is less than 3, the color-changing effect is insignificant, and if it is greater than 30, a color uniformity issue arises. At this time, if the range of the db value is less than 65, the color layer has a color uniformity issue, and if it is greater than 181, the color-changing effect is insignificant.

In addition, the transmittance of the color-changing sheet is preferably 5% or less.

A method of manufacturing a color-changing sheet according to an embodiment of the present invention may include the steps of introducing a raw material of the base layer 110 and a raw material of the color layer 120 respectively into a melt extruder, extruding under a predetermined extrusion cylinder temperature condition, and making individually melt-extruded two components into a multi-layer sheet structure and cooling by passing the sheet structure through a cooling roll, and may further include the step of forming a surface protective layer by coating a hard coating liquid onto the surface of the color layer 120 and drying it.

In the step of introducing, respectively, the raw material of the base layer 110 and the raw material of the color layer 120 into melt-extruders, the raw material of the base layer containing: a polyester-based resin including a master batch based on a polyester resin including color dyes and pigments; and a polyester-based virgin material, and the raw material of the color layer are respectively introduced into the melt-extruder.

In the step of making individually melt-extruded two components into a multi-layer sheet structure, individually melt-extruded two components may be passed through a feed block and a T-die to prepare the multi-layer sheet structure, or may be extruded through different flow paths of a multi-layer T-die.

Hereinafter, the present invention will be described in further detail with reference to Examples. The following Examples are provided to illustrate further the present disclosure and are not intended to limit the scope of the present invention.

### [Examples]

### [Example 1]

A base layer raw material in which 11 parts by weight of polyester-based black color master batch were mixed with 100 parts by weight of virgin polyester-based resin and a color layer raw material in which 6.4 parts by weight of polyester-based red master batch was mixed with 100 parts by weight of virgin polyester-based resin were introduced, respectively, into separate melt extruders and the base layer raw material and the color layer material were coextruded at a discharge rate of 540 kg per hour and at a discharge rate of 60 kg per hour, respectively, at an extrusion cylinder temperature of 270° C. Each of the melt-extruded components was passed through a two-layered passage and a T-die to prepare a multi-layer sheet structure, and then cooled by passing through a cooling roll to prepare a sheet. In this case, a sheet was prepared at a thickness ratio of 10:1 wherein a thickness of a base layer was 300 *µ*m and a thickness of a color layer was 30 *µ*m. After coating a hard coating liquid on the surface of the color layer of the prepared sheet, a protective coating layer was formed by drying and UV-curing the same, thereby preparing a color-changing sheet.

### [Example 2]

A color-changing sheet was prepared in the same manner as in Example 1, except that the thickness of the base layer was 30 µm, the thickness of the color layer was 300 µm, and the thickness ratio was 0.1:1.

### [Example 3]

A color-changing sheet was prepared in the same manner as in Example 1, except that 9 parts by weight of the polyester-based black color master batch were included in the base layer raw material.

### [Example 4]

A color-changing sheet was prepared in the same manner as in Example 1, except that 4 parts by weight of the polyester-based red or blue master batch were included in the color layer raw material.

### [Example 5]

A color-changing sheet was prepared in the same manner as in Example 1, except that 9 parts by weight of the polyester-based red or blue master batch were included in the color layer raw material.

### [Comparative Example 1]

A color-changing sheet was prepared in the same manner as in Example 1, except that the thickness of the base layer was 15 µm, the thickness of the color layer was 300 µm, and the thickness ratio was 0.05:1.

### [Comparative Example 2]

A color-changing sheet was prepared in the same manner as in Example 1, except that the thickness of the base layer was 300 µm, the thickness of the color layer was 27 µm, and the thickness ratio was 11.2: 1.

### [Comparative Example 3]

A color-changing sheet was prepared in the same manner as in Example 1, except that 7 parts by weight of the polyester-based black color master batch were included in the base layer raw material.

### [Comparative Example 4]

A color-changing sheet was prepared in the same manner as in Example 1, except that 3 parts by weight of the polyester-based red master batch were included in the color layer raw material.

### [Comparative Example 5]

A color-changing sheet was prepared in the same manner as in Example 1, except that 10 parts by weight of the polyester-based red master batch ware included in the color layer raw material.

### [Comparative Example 6]

A color-changing sheet was prepared in the same manner as in Example 1, except that 15 parts by weight of the polyester-based red master batch were included in the color layer raw material.

### [Comparative Example 7]

A color-changing sheet was prepared in the same manner as in Example 1, except that 1 part by weight of the polyester-based red master batch was included in the color layer raw material.

Physical properties were measured through the following experimental example using the sheets obtained in Examples 1 to 5 and Comparative Examples 1 to 7, and the results are shown in Tables 1 to 3 below.

### [Experimental Example]

### (1) Transmittance Measurement

When the conditions were established, only the color layer was extruded, and the transmittance of the color layer was measured using COH-400 (NIPPON DENSHOKU INDUSTRIES CO., LTD.), and the total transmittance was measured using COH-400 (NIPPON DENSHOKU INDUSTRIES CO., LTD.) on the top of the color layer.

### (2) Base Layer Brightness Measurement

Brightness of the base layer was measured using CM-2500D (KONICA MINOLTA, INC.) under the base layer where the color layer was not formed.

### (3) L*a*b Color Coordinate Measurement

Color values (L, a, and b) were measured at six angles using CM-M6 (KONICA MINOLTA, INC.) on the top of the color layer.

**[Table 1]**

| | Color layer transmittance | Total transmittance | Base layer brightness |
|---|---|---|---|
| Example 1 | 85 | 0.5 | 28 |
| Example 2 | 85 | 0.5 | 28 |
| Example 3 | 85 | 0.6 | 39 |
| Example 4 | 90 | 0.5 | 28 |
| Example 5 | 80 | 0.5 | 28 |
| Comparative Example 1 | 85 | 0.5 | 28 |
| Comparative Example 2 | 85 | 0.5 | 28 |
| Comparative Example 3 | 85 | 0.5 | 40 |
| Comparative Example 4 | 95 | 0.4 | 28 |
| Comparative | 75 | 0.5 | 28 |
| Example 5 | | | |
| Comparative Example 6 | 18 | 0.5 | 28 |
| Comparative Example 7 | 92 | 0.5 | 28 |

**[Table 2]**

| | | | | | | | | | |
|---|---|---|---|---|---|---|---|---|---|
| Example 1 | Group Traits | L% | a* % | b* % | Example 2 | Group Traits | L% | a* % | b* % |
| | -15°(DP) | 100% | 100% | 100% | | -15°(DP) | 100% | 100% | 100% |
| | 15°(DP) | 74% | 102% | 87% | | 15°(DP) | 74% | 107% | 151% |
| | 25°(DP) | 54% | 96% | 69% | | 25°(DP) | 46% | 107% | 194% |
| | 45°(DP) | 45% | 86% | 46% | | 45°(DP) | 41% | 109% | 217% |
| | 75°(DP) | 39% | 78% | 33% | | 75°(DP) | 42% | 116% | 243% |
| | 110°(DP) | 35% | 72% | 16% | | 110°(DP) | 40% | 114% | 255% |
| Example 3 | Group Traits | L% | a* % | b* % | Example 4 | Group Traits | L% | a* % | b* % |
| | -15°(DP) | 100% | 100% | 100% | | -15°(DP) | 100% | 100% | 100% |
| | 15°(DP) | 79% | 107% | 115% | | 15°(DP) | 82% | 107% | 84% |
| | 25°(DP) | 56% | 109% | 129% | | 25°(DP) | 64% | 101% | 65% |
| | 45°(DP) | 52% | 112% | 136% | | 45°(DP) | 55% | 93% | 58% |
| | 75°(DP) | 45% | 118% | 144% | | 75°(DP) | 47% | 84% | 48% |
| | 110°(DP) | 39% | 115% | 165% | | 110°(DP) | 40% | 77% | 35% |
| Example 5 | Group Traits | L% | a* % | b* % | | | | | |
| | -15°(DP) | 100% | 100% | 100% | | | | | |
| | 15°(DP) | 58% | 130% | 75% | | | | | |
| | 25°(DP) | 22% | 128% | 13% | | | | | |
| | 45°(DP) | 15% | 123% | -19% | | | | | |
| | 75°(DP) | 13% | 115% | -51% | | | | | |
| | 110°(DP) | 12% | 104% | -81% | | | | | |

**[Table 3]**

| | | | | | | | | | |
|---|---|---|---|---|---|---|---|---|---|
| Comparative Example 1 | Group Traits | L% | a* % | b* % | Comparative Example 2 | Group Traits | L % | a* % | b* % |
| | -15°(DP) | 100% | 100% | 100% | | -15°(DP) | 100% | 100% | 100% |
| | 15°(DP) | 68% | 72% | 45% | | 15°(DP) | 74% | 102% | 87% |
| | 25°(DP) | 49% | 90% | -25% | | 25°(DP) | 54% | 96% | 69% |
| | 45°(DP) | 19% | 232% | 45% | | 45°(DP) | 45% | 88% | 50% |
| | 75°(DP) | 3% | 424% | 214% | | 75°(DP) | 43% | 80% | 43% |
| | 110°(DP) | 3% | 451% | 241% | | 110°(DP) | 41% | 65% | 30% |
| Comparative Example 3 | Group Traits | L % | a^{∗} % | b^{∗} % | Comparative Example 4 | Group Traits | L % | a^{∗} % | b^{∗} % |
| | -15°(DP) | 100% | 100% | 100% | | -15°(DP) | 100% | 100% | 100% |
| | 15°(DP) | 75% | 105% | 90% | | 15°(DP) | 82% | 107% | 84% |
| | 25°(DP) | 57% | 99% | 72% | | 25°(DP) | 64% | 101% | 65% |
| | 45°(DP) | 48% | 88% | 49% | | 45°(DP) | 55% | 93% | 58% |
| | 75°(DP) | 40% | 80% | 38% | | 75°(DP) | 47% | 84% | 48% |
| | 110°(DP) | 38% | 65% | 25% | | 110°(DP) | 42% | 77% | 35% |
| Comparative | Group | L % | a* % | b* % | Comparative | Group | L % | a* % | b* % |
| Example 5 | Traits | | | | Example 6 | Traits | | | |
| | -15°(DP) | 100% | 100% | 100% | | -15°(DP) | 100% | 100% | 100% |
| | 15°(DP) | 58% | 134% | 75% | | 15°(DP) | 68% | 76% | 46% |
| | 25°(DP) | 22% | 128% | 13% | | 25°(DP) | 49% | 98% | -45% |
| | 45°(DP) | 15% | 123% | -19% | | 45°(DP) | 20% | 225% | -29% |
| | 75°(DP) | 13% | 115% | -51% | | 75°(DP) | 3% | 382% | 93% |
| | 110°(DP) | 10% | 104% | -81% | | 110°(DP) | 2% | 377% | 127% |
| Comparative Example 7 | Group Traits | L % | a % | b* % | | | | | |
| | -15°(DP) | 100% | 100% | 100% | | | | | |
| | 15°(DP) | 79% | 107% | 115% | | | | | |
| | 25°(DP) | 56% | 109% | 129% | | | | | |
| | 45°(DP) | 52% | 112% | 136% | | | | | |
| | 75°(DP) | 54% | 118% | 144% | | | | | |
| | 110°(DP) | 53% | 115% | 144% | | | | | |

As shown in Tables 1 to 3, in Examples 1 to 5 in which the brightness of the base layer, the transmittance of the color layer, and the thickness ratio between the base layer and the color layer satisfy the configuration of the present invention, the L*a*b color coordinate measurement results satisfy all the range of dL value of 60 to 88, the range of da value of 4 to 30, and the range of db value of 65 to 181.

In Comparative Example 1, in which the thickness of the base layer is excessively thin compared to the color layer, the color of the color layer is not distinctively visible because the da and db values are large.

In Comparative Example 2, in which the thickness of the base layer is excessively thick compared to the color layer, red color is less visible because the change in dL value for each angle is small and the change in da value for each angle is large.

Comparative Example 3 in which the brightness of the base layer is 40 has a problem in that the da value is 30 or more.

Comparative Example 4 having an insufficient amount of color dye or pigment has a problem of a small change in dL value for each angle, and Comparative Example 5 having an excessive amount of color dye or pigment has a problem of high dL and da values.

Comparative Example 6 having a color layer transmittance of less than 20 has a problem of high dL and da values, and Comparative Example 7 having a color layer transmittance of more than 90 has a problem of low dL and db values.

In this way, the color-changing sheet according to an embodiment of the present invention creates suitable color change required in the L*a*b color coordinate system through the brightness, transmittance and thickness ratio of the base layer and the color layer, and thus, when used as a decorative sheet, may realize color change without adding additional particles.

While the present invention has been particularly shown and described with reference to exemplary embodiments thereof, it will be understood by those of ordinary skill in the art that various changes in form and details may be made therein without departing from the spirit and scope of the present invention as defined by the following claims.

### REFERENCE NUMERALS

110: base layer
120: color layer
130: protective coating layer

## Claims

1. A color-changing sheet comprising:
a base layer having a brightness (L value) of less than 40; and
a color layer positioned on at least one surface of the base layer, containing a color dye or a pigment, and having a transmittance of 20 to 90%,
wherein a thickness ratio of the base layer to the color layer is 0.1 to 10.

2. The color-changing sheet of claim 1, further comprising:
a protective coating layer formed on the color layer.

3. The color-changing sheet of claim 1, wherein the base layer and the color layer include at least one selected from polyester, polycarbonate, and polypropylene.

4. The color-changing sheet of claim 1, wherein the color layer includes 4 to 9 parts by weight of a color dye or a pigment based on 100 parts by weight of a polyester resin.

5. The color-changing sheet of claim 1, wherein transmittance of the color-changing sheet is 5% or less.

6. The color-changing sheet of claim 1, wherein the base layer has a thickness of 0.03 to 0.3 mm.

7. The color-changing sheet of claim 1, wherein the color layer has a thickness of 0.03 to 0.3 mm.

8. The color-changing sheet of claim 1, wherein a difference in brightness index (L value) for each measurement angle of the color layer is 60 to 88%.

9. The color-changing sheet of claim 1, wherein a variation (dL) of an L value is 60 to 88, a variation (da) of an a value is 4 to 30, and a variation (db) of a b value is 65 to 181 in the L*a*b color coordinate system.

10. The color-changing sheet of claim 1, wherein the base layer is black.

11. The color-changing sheet of claim 1, wherein the color layer is red or blue.
